# FASCICULE DE BREVET EUROPEEN

(11) **EP 1 722 934 B1**
(45) Date de publication et mention de la délivrance du brevet: **07.05.2008**
(21) Numéro de dépôt: 05728081.0
(22) Date de dépôt: 25.02.2005
(51) Int. Cl.: B25J 3/04, B25J 1/08

(54) **BRAS DE TELEMANIPULATION EN DEUX PARTIES**
ZWEITEILIGER FERNMANIPULATIONSARM
TWO-PART TELEMANIPULATION ARM

(30) Priorité: 26.02.2004 FR 0450358
(43) Date de publication de la demande: 22.11.2006
(73) Titulaire: COMMISSARIAT A L'ENERGIE ATOMIQUE, 75015 Paris (FR); Areva NC, 75009 Paris (FR)
(72) Inventeur: GARREC, Philippe, F-91190 Gif sur Yvette (FR); PIOLAIN, Gérard, F-50130 Octeville (FR)
(74) Mandataire: Poulin, Gérard
(86) Numéro de dépôt international: PCT/FR2005/050128
(87) Numéro de publication internationale: WO 2005/084894

(56) Documents cités:
- FR-A- 2 667 532
- US-A- 3 428 189

## Description

Le sujet de cette invention est un bras de télémanipulation comprenant un bras maître et un bras esclave en deux parties séparées, tel que défini dans le préambule de la revendication 1.

Un tel bras est connu du document FR-A-2 667 532.

Les bras de télémanipulation composés d'un bras maître et d'un bras esclave sont couramment employés pour travailler en milieu hostile et comprennent des transmissions mécaniques reliant les articulations des segments du bras maître à celles du bras esclave de façon à faire reproduire les mouvements du bras maître, imposés par un opérateur, par le bras esclave. L'extrémité du bras maître est tenue par l'opérateur et l'extrémité du bras esclave comprend généralement un outil de manipulation ayant à accomplir un travail.

Les bras de télémanipulation sont généralement d'un seul tenant, le bras maître étant relié au bras esclave directement afin que les transmissions mécaniques soient continues.

Il existe cependant une conception exposée dans le brevet français 2 667 532, qui enseigne que le bras esclave peut être dépourvu de bras maître et commandé par un dispositif à boutons ou d'un genre analogue, sans production d'un mouvement de commande reproduit par le bras esclave : les commandes sont converties en signaux électriques fournis à un système de pilotage qui entraîne des moteurs commandant les transmissions du bras esclave d'après ces signaux. On peut se permettre des lois de commande différentes, éventuellement plus précises ou plus efficaces, du bras esclave. Une autre caractéristique est que les efforts dans le bras, dus à la gravité ou au travail entrepris, ne sont plus transmis à l'opérateur. Si la fatigue de celui-ci est moindre, il est à noter qu'on cherche souvent, au contraire, à lui faire ressentir un effort proportionné à celui que subit l'outil pour améliorer la qualité de la commande. Des dispositifs dits de retour d'effort sont ajoutés pour produire les réactions voulues dans le bras maître. Aucune réaction telle ne peut être produite selon ce brevet 2 667 532.

Les bras de télémanipulation ont généralement des mouvements limités. C'est ainsi que le mouvement de pivotement d'un segment tubulaire dit de traversée, engagé à travers une paroi de protection et monté sur des roulements, est en pratique réduit puisqu'il est produit en faisant basculer le bras maître vers le haut, ce qui ne peut être fait que d'un petit angle puisqu'une élévation trop grande ne permettrait plus à l'opérateur de tenir convenablement le bras maître et que le basculement du bras maître s'accompagne d'un même basculement du bras esclave dont le poids produit un moment antagoniste à l'élévation qui gêne l'opérateur. Des contrepoids réduisent le moment de basculement mais leur action reste incomplète en pratique. Malgré leurs possibilités, les bras esclaves sont donc associés à un volume de travail réduit et surtout de faible hauteur. Le brevet cité ci-dessus ne remédie pas à cette insuffisance : il contient l'indication de faire pivoter le bras esclave par un vérin disposé transversalement, qui n'autorise qu'un petit angle de mouvement.

L'objet le plus important de l'invention est donc d'accroître les possibilités de mouvement dans les bras de télémanipulation et notamment en élevant le niveau où le bras esclave peut être placé, et sans peine pour l'opérateur.

L'agencement retenu pour le nouveau bras de télémanipulateur implique que le bras maître et le bras esclave sont séparés afin d'entraîner le bras esclave dans des rotations importantes sans renoncer aux bénéfices de la commande par production d'un mouvement manuel associé éventuellement à un retour d'effort vers l'opérateur.

Sous une définition générale, l'invention concerne un bras de télémanipulateur comprenant un bras maître et un bras esclave dépourvus de transmission mécanique directe les unissant mais pourvus d'un système d'interface comprenant une partie de pilotage, de nature plutôt électrique et informatique, et une partie motrice entraînant les transmissions mécaniques incluses dans le bras esclave sous la commande de signaux émis par la partie de pilotage en réponse à des indications de mouvements accomplis sur le bras maître ; la partie motrice comprend une enveloppe stationnaire, un tambour monté à rotation dans l'enveloppe et fixé au bras esclave, et un moteur stationnaire ainsi qu'une transmission reliant le tambour au moteur et permettant de faire tourner le tambour d'un tour complet.

La conservation du bras maître implique celle des retours d'effort appliqués à l'opérateur, après une conversion des efforts siégeant dans le bras esclave en signaux électriques par le système d'interface.

Ces objets de l'invention ainsi que d'autres seront décrits maintenant en liaison aux figures :
- la figure 1 illustre l'aspect général de l'invention ;
- la figure 2 illustre le système d'entraînement du bras esclave ;
- et les figures 3, 4 et 5 illustrent certains aspects particuliers de l'invention.

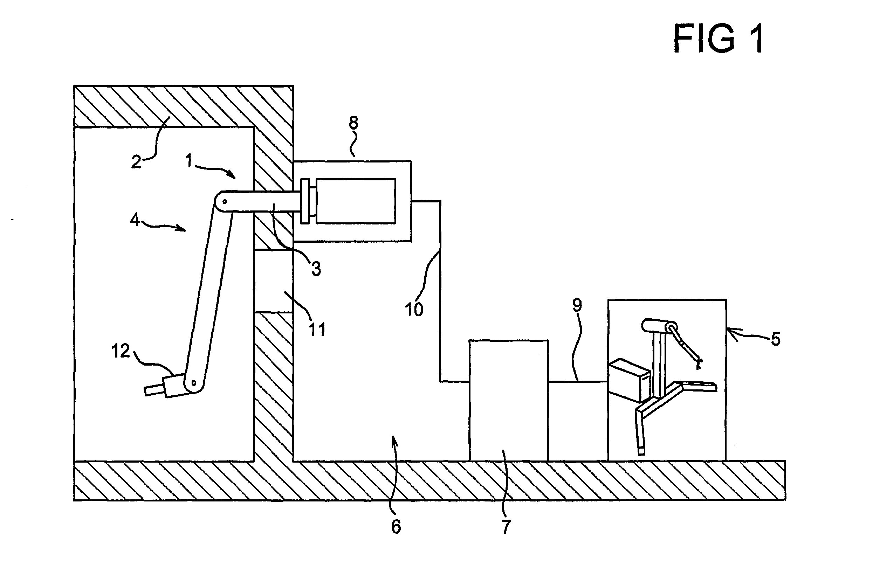

La figure 1 est abordée. Un bras esclave 1 comprend un premier segment 3 tubulaire, engagé à travers une paroi de protection 2, et un train 4 d'autre segments articulés entre eux et au premier segment 3 et situés au-delà de la paroi de protection 2 dans le milieu hostile de travail ; un bras maître 5 disposé à quelque distance du bras esclave 3 ; et un système d'interface 6 composé d'une partie de pilotage 7 et d'une partie motrice 8 fixée à la paroi de protection 2 et unie au bras esclave 3. Des lignes électriques 9 et 10 relient la partie de pilotage 7 au bras maître 5 et à la partie motrice 8 pour commander celle-ci d'après les mouvements de celui-là. Enfin, un hublot 11 permet à l'opérateur tenant le bras maître 5 d'observer l'effet de son action sur le bras esclave 1 et l'outil 12 (souvent une pince).

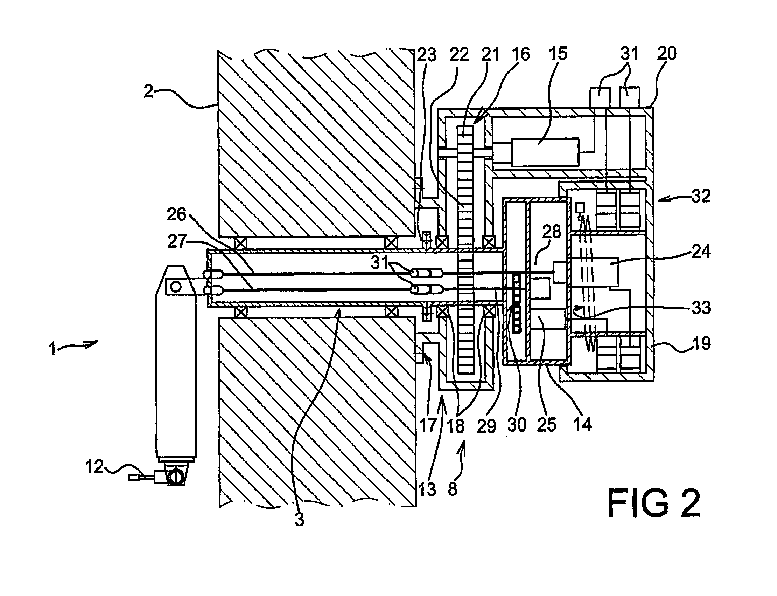

On passe à la figure 2 pour une vue principale de la partie la plus remarquable de l'invention, soit la partie motrice 8. Elle comprend principalement une enveloppe 13 stationnaire, un tambour 14 tournant dans l'enveloppe 13, un moteur 15 stationnaire d'entraînement 2 du tambour 14 et une transmission à engrenage 16 assurant cet entraînement qui comprend un pignon sur l'arbre de sortie du moteur 15 et une couronne sur le tambour 14. Le pignon peut engrener avec la couronne ou lui être relié par une courroie crantée ou un autre moyen. L'enveloppe 13 est montée sur la paroi de protection 2 par un dispositif d'ancrage 17. Le tambour 14 est soutenu par l'enveloppe 13 au moyen de paliers 18 permettant sa rotation et s'étend au moins partiellement dans une portion cylindrique 19 de l'enveloppe 13. Le moteur 15 s'étend dans une autre portion 20 de l'enveloppe 13 et y est fixé. La transmission 16 comprend un pignon 21 fixé à l'arbre de sortie du moteur 15 et une couronne 22 engrenant avec le pignon 21, entourant une portion du tambour 14. Ce système permet de faire tourner le tambour 14 d'un tour complet, et plus, autour d'un axe confondu avec celui du premier segment 3, qui est adjacent à l'extrémité du tambour 14 et dans son prolongement. La liaison complète peut être établie par le vissage de brides 23 en contact appartenant à ces deux pièces. La rotation du tambour 14 entraîne donc celle du premier segment 3, ainsi que celle de tout le bras esclave 1.

Le tambour 14 contient un certain nombre de moteurs de commande, parmi lesquels on peut distinguer un moteur central 24, les autres (au nombre de six, mais un seul étant représenté ici) étant des moteurs latéraux 25. Chacun de ces moteurs de commande 24 et 25 est associé à une transmission s'étendant dans le bras esclave 1 pour commander un segment du train 4 et qui comprend typiquement une barre de transmission dans le segment tubulaire 3. La barre associée au moteur de commande central 24 porte la référence 26, et les barres associées aux autres moteurs de commande 25 portent la référence 27 (une seule est représentée ici aussi). La barre 26 est prolongée dans le tambour 14 par un arbre 28 de sortie du moteur 1, et les barres 27 par des arbres 29 qui sont entraînés par les moteurs latéraux 25 par l'intermédiaire de transmissions à courroie crantée 30 qui permettent de déplacer les moteurs latéraux 25 correspondants près de la périphérie du tambour 14 et ne comportent qu'un très petit jeu. Les barres 26 et 27 se joignent aux arbres 28 et 29 par des accouplements 31 à boulons ou autres. La barre 26 est destinée à faire basculer le segment articulé au segment tubulaire 3, et aussi le reste du train 4, dans une direction verticale, ce qui peut produire un moment important de réaction dû à la gravité et impose une puissance convenable au moteur de commande 24 et une résistance appropriée de la transmission mécanique, alors que les efforts s'exerçant sur les barres 27, les arbres 29 et les moteurs latéraux 25 sont beaucoup moins importants, ce qui permet l'emploi des transmissions 30 fragiles. De même, le pivotement du segment tubulaire 3 exige de résister à un gros effort, ce qui justifie l'emploi d'une transmission résistante à engrenage 16.

On a encore représenté les connecteurs électriques 31 qui reçoivent les fils de la ligne 10 et sont placés sur l'enveloppe 13, un dispositif enrouleur de câbles 32 qui permet d'alimenter convenablement les moteurs de commande 24 et 25 en électricité, et un dispositif de fin de course 33. Les deux derniers dispositifs vont maintenant être décrits à l'aide des figures suivantes.

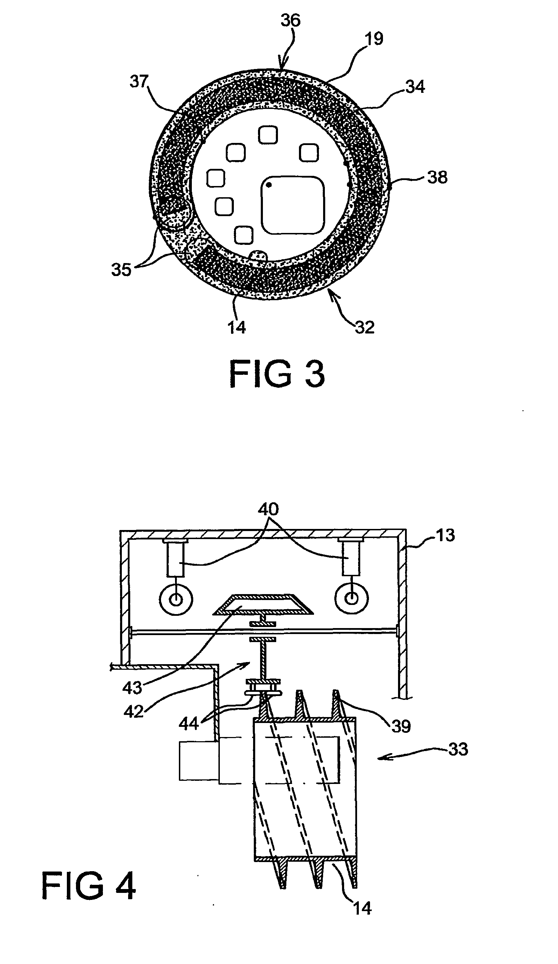

La figure 3 représente l'enrouleur de câble 32. Il est disposé dans un espace annulaire entre la partie cylindrique 19 contenant le tambour 14 et le tambour 14 lui-même, et il consiste principalement en une pièce en arc de cercle 34 montée librement dans cet espace et dont les extrémités au moins sont munies de rouleaux 35. De plus, les câbles 36 de liaison au tambour 14 présentent un point de fixation 37 au tambour 14 et un point de fixation 38 à l'enveloppe 13. Leur extension est d'un peu plus d'une circonférence du tambour 14. Les caractéristiques du dispositif et de son fonctionnement peuvent être résumées ainsi : le bras esclave 5 et notamment le segment tubulaire 3 doivent tourner pour être placés à toutes les positions angulaires ; des débattements d'un tour suffisent pour placer l'outil 12 à toutes les positions possibles, mais une course angulaire un peu plus grande est nécessaire pour absorber le freinage du bras et déclencher les dispositifs de fin de course. La pièce en arc de cercle 14 répartit la longueur des câbles 36 en un brin extérieur voisin de la portion cylindrique 19 et un brin intérieur voisin du tambour 14 de part et d'autre d'un des rouleaux 35. On est ici à une position extrême du tambour 14. En déplaçant celui-ci dans le sens des aiguilles d'une montre, on tire sur le brin intérieur des câbles 36 tout en réduisant la longueur du brin extérieur et en faisant tourner la pièce en arc de cercle 34. La rotation est autorisée jusqu'à ce que le brin extérieur ait disparu. Une position convenable des câbles 36 reste garantie par la pièce en arc de cercle 34 qui sert d'espaceur à toute position. Le tambour 14 peut être tourné sur un tour et plus sans encombre et avec peu de frottement. En pratique les câbles sont placés dans une chaîne de protection près de son rayon de courbure moyen pour minimiser le frottement des câbles entre eux.

La figure 4 illustre le dispositif de fin de course 33. Une hélice 39 est disposée à la périphérie du tambour 14. Deux contacts de fin de course sont montés sur l'enveloppe 13. Une glissière 41 est aussi montée sur l'enveloppe 13 et porte un chariot 42 qui coulisse sur elle. Le chariot 42 comprend une came 43 pouvant venir en butée avec les contacts de fin de course 40 et une paire de galets 44 enserrant l'hélice 39 en formant une entaille du chariot dans laquelle elle s'engage. La rotation du tambour 14 fait défiler l'hélice 39 entre les galets 44 tout en les déplaçant, ainsi que le reste du chariot 42, les glissières 41 étant parallèles à l'axe de rotation du tambour 14 et à celui de l'hélice 39. Quand la came 43 touche les contacts de fin de course 40, un arrêt du mouvement du tambour 14 est imposé. Les contacts de fin de course 40 sont reliés à la partie de pilotage 7 par des lignes électriques non représentées pour signaler ces états. Ce procédé assure la protection de l'enrouleur sur sa course angulaire de rotation.

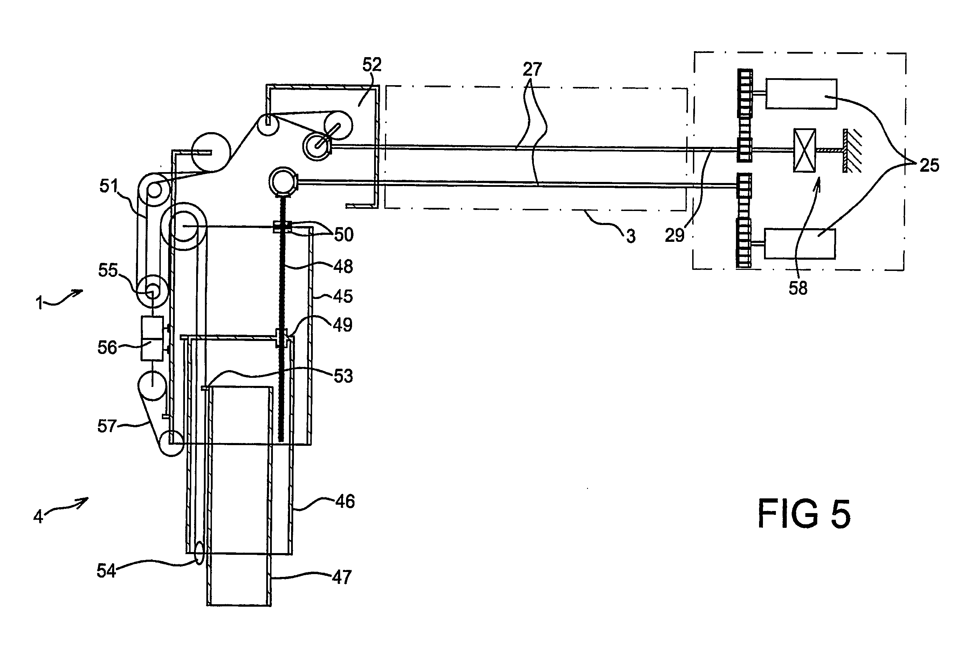

Un perfectionnement particulier est représenté à l'aide de la figure 5. Il s'applique à certains bras esclaves connus qui sont caractérisés en ce que les derniers segments du train 4 sont coulissants pour faire varier la longueur du bras esclave 1 plutôt que tournants. Cette caractéristique concerne ici trois segments d'extrémité 45, 46 et 47. La transmission permettant de régler le déploiement du segment 46 médian par rapport au segment 45 précédent comprend une vis sans fin 48 disposée à travers une douille taraudée 49 fixée au segment 46 médian, la vis sans fin 48 étant retenue à une position fixe du segment précédent 45 par des collerettes 50. Elle est entraînée en rotation par des moyens à engrenage, à renvoi d'angle, à barre de transmission, etc. traversant les segments antérieurs et finissant en une des barres de transmission et un des moteurs de commande 25. La structure de ce bras étant connue, nous n'avons représenté que partiellement sa structure et la transmission. Il en va de même de la transmission de commande du mouvement du segment extrême 47. Nous relèverons simplement qu'elle comprend un élément à câble 50 à double brin, les brins aboutissant respectivement à une paire de poulies 52 entraînées par une même barre de commande 27. Il aboutissent à leur extrémité opposée à un point de fixation commun 53 sur le segment extrême 47, l'un d'entre eux passant en outre par une poulie de renvoi 54 fixée au bas du segment médian 46. Comme les brins sont enroulés sur les poulies 52 dans des sens opposés, une rotation de la barre 27 déroule l'un et enroule l'autre, ce qui fait qu'ils coopèrent au déploiement ou à la rétraction du segment extrême 47 dans le segment médian 46. Il est à noter que la rotation de la vis sans fin 48 déplace non seulement le segment médian 46 mais le segment extrême 47, puisque les brins du câble 51 passent aussi par une autre poulie de renvoi 55 solidaire d'un chariot 56 monté sur le segment précédent 45 et qui est relié au segment médian 46 par un autre câble 57. Un déplacement du segment médian 46, vers le bas par exemple, détend le câble 57, qui permet au chariot 56 de s'élever le long du segment précédent 45 de la moitié de ce déplacement, chacun des brins du câble 51 est détendu du demi-déplacement de chaque côté de la poulie de renvoi 55, et le segment extrême 47 descend de la même quantité que le segment médian 46.

La transmission à la vis sans fin 48 est robuste, mais pas celle au câble 51. Il arrive que les segments du train 4 doivent résister à un effort important, comme une lourde charge. Il est alors envisagé de bloquer le mouvement du câble 51 et de ne recourir qu'au mouvement autorisé par la vis sans fin 48. On y parvient par un frein mécanique 58 bloquant la rotation de l'arbre 29 associé à la transmission au câble 51 et qui peut consister en un disque de frottement ou un crabot mobile. Le moteur 25 et la transmission 30 associés sont soulagés de l'effort subi par la barre de commande 27.

Un bras maître 5 convenable peut être celui que la société Haption développe sous la référence Virtuose 6D 4040. Sa capacité en effort est limitée à 4 kilogrammes. Son frottement (rapporté à sa capacité) est comparable à celui du bras esclave 1 et à celui d'un télémanipulateur classique. Il est aussi à noter que la partie de pilotage 7 peut aussi travailler en retour d'effort, c'est-à-dire enregistrer les efforts subis par le bras esclave 1 grâce aux efforts que les moteurs de commande doivent fournir ou par des capteurs appropriés placés sur les moteurs ou les transmissions, et les faire ressentir à l'opérateur en créant des efforts dans des moteurs du bras maître. Cependant, il est prévu que la séparation du bras maître 5 et du bras esclave 1 permettra de piloter le bras maître 5 beaucoup plus facilement, avec des efforts réduits permettant à l'opérateur d'utiliser deux bras à la fois, un dans chaque main, ce qui lui donnera des possibilité de travail beaucoup plus importantes qu'avec les bras généralement fatigants qu'on connaît aujourd'hui. Un autre mode de commande peut être adapté dans lequel un seul bras maître et un opérateur peut à lui seul commander deux bras esclaves du poste de travail ce qui permet en particulier de doubler la capacité d'effort et de développer des couples importants en agissant en opposition sur une pièce en deux points écartés. On remarque enfin que l'équilibrage du bras esclave 1 peut se faire avantageusement avec précision grâce à la commande par logiciel qui peut calculer les couples et efforts dus à la gravité. Le cas échéant un équilibrage par contrepoids sera beaucoup plus facile à réaliser en l'absence d'un bras maître qui lui soit relié mécaniquement.

## Revendications

1. Bras de télémanipulation, comprenant un bras maître (5) manié par un opérateur, un bras esclave (1) comprenant un premier segment (3), tubulaire, engagé à travers une paroi (2) et d'autres segments finissant sur un organe de manipulation (12), lesdits segments composant un train articulé (4), le bras maître et le bras esclave étant dépourvus de transmission mécanique directe les unissant mais pourvus d'un système d'interface comprenant une partie de pilotage (7) et d'une partie motrice (8), la partie motrice étant accouplée au segment tubulaire (3) et comprenant des moteurs (24, 25) de commande de transmissions mécaniques (26, 27) incluses dans le bras esclave (1), et la partie de pilotage (7) commandant les moteurs en réponse à des indications de mouvement accomplies sur le bras maître (5), la partie motrice (8) comprenant une enveloppe stationnaire (13), **caractérisé par** un tambour (14) monté à rotation dans l'enveloppe et fixé au segment tubulaire (3), un moteur stationnaire (15) et une transmission (16) comprenant une couronne (22) autour du tambour (14) et un organe (21) de prise de la couronne, et reliant le tambour (14) au moteur stationnaire (15).

2. Bras de télémanipulateur selon la revendication 1, **caractérisé en ce qu'**il comprend un enrouleur de câbles électriques menant aux moteurs de commande.

3. Bras de télémanipulateur selon la revendication 2, **caractérisé en ce que** l'enrouleur (32) comprend une pièce en arc de cercle (34) libre entre le tambour (14) et une portion cylindrique de l'enveloppe (13), les câbles électriques (36) étant fixés à un point du tambour et à un point de ladite portion cylindrique.

4. Bras de télémanipulateur selon la revendication 1, 2 ou 3, **caractérisé en ce qu'**il comprend des interrupteurs de fin de course (33) du tambour, comprenant des parties stationnaires et des parties mobiles montées sur un chariot (42) coulissant, et une hélice (39) fixée au tambour et s'engageant dans une entaille du chariot.

5. Bras de télémanipulateur selon l'une quelconque des revendications précédentes, **caractérisé en ce qu'**une (26) des transmissions mécaniques incluses dans le bras esclave, qui entraîne en rotation un des segments du train, qui est adjacent au premier segment, et le moteur de commande (24) qui entraîne ladite transmission mécanique, sont placés le long d'un axe de rotation du premier segment.

6. Bras de télémanipulateur selon l'une quelconque des revendications précédentes, **caractérisé en ce que** deux des segments du train sont soumis à des mouvements coulissants par deux des transmissions mécaniques dont l'une comprend un câble et l'autre comprend une vis sans fin, et **en ce qu'**un bloqueur mécanique (58) de la transmission comprenant le câble est prévu dans la partie motrice du système d'interface.

## Claims

1. A remote manipulation arm, comprising a master arm (5) handled by an operator, a slave arm (1) comprising a first tubular segment (3) engaged through a wall (2) and other segments ending on a manipulation member (12), said segments forming a jointed train (4), the master arm and the slave arm having no direct mechanical transmission linking them but are provided with an interface system comprising a control portion (7) and a power portion (8), the power portion being coupled with the tubular segment (3) and comprising motors (24, 25) for controlling mechanical transmissions (26, 27) included in the slave arm (1), and the control portion (7) controlling the motors in response to indications of movement accomplished on the master arm (5), the power portion (8) comprising a stationary casing (13), **characterized by** a drum (14) rotatably mounted in the casing and attached to the tubular segment (3), a stationary motor (15) and a transmission (16) comprising a crown (22) around the drum (14) and a member (21) for engaging with the crown, and connecting the drum (14) to the stationary motor (15).

2. Remote manipulator arm according to claim 1, **characterized in that** it comprises a winder of electrical cables leading to the control motors.

3. Remote manipulator arm according to claim 2, **characterized in that** the winder (32) comprises a free circular-arc-shaped part (34) between the drum (14) and a cylindrical portion of the casing (13), the electrical cables (36) being attached to a point of the drum and to a point of said cylindrical portion.

4. Remote manipulator arm according to claim 1, 2 or 3, **characterized in that** it comprises end-of-travel switches (33) of the drum, comprising stationary portions and mobile portions mounted on a sliding carriage (42), and a helix (39) attached to the drum and engaging into a groove of the carriage.

5. Remote manipulator arm according to any of the preceding claims, **characterized in that** one (26) of the mechanical transmissions included in the slave arm, which drives into rotation one of the segments of the train, which is adjacent to the first segment, and the control motor (24) which drives said mechanical transmission, are placed along an axis of rotation of the first segment.

6. Remote manipulator arm according to any of the preceding claims, **characterized in that** two of the segments of the train are subject to sliding movements by two of the mechanical transmissions, one of which comprises a cable and the other comprises a worm screw, and **in that** a mechanical blocker (58) of the transmission comprising the cable is provided in the power portion of the interface system.

## Patentansprüche

1. Fernmanipulationsarm mit einem durch einen Operator bedienten Master-Arm (5) und einem Slave-Arm, der ein erstes eine Wand (2) durchquerendes rohrförmiges Segment (3) und weitere Segmente umfasst und mit einem Manipulationsorgan (12) endet, wobei die genannten Segmente einen Gelenkzug (4) bilden und der Master-Arm und der Slave-Arm keine sie verbindende direkte mechanische Übertragung aufweisen sondern über ein Schnittstellensystem verfügen, das einen Steuerteil (7) und einen Antriebsteil (8) umfasst, wobei der Antriebsteil mit dem rohrförmigen Segment (3) gekoppelt ist und in den Slave-Arm (1) eingebaute Antriebsmotoren (24, 25) von mechanischen Transmissionen (26, 27) umfasst, und der Steuerteil (7) die Motoren als Reaktion auf an dem Master-Arm (5) ausgeführte Bewegungsangaben steuert, wobei der Antriebsteil (8) ein stationäres Gehäuse (13) umfasst, **gekennzeichnet durch** eine drehbar in das Gehäuse montierte und an dem rohrförmigen Segment (3) befestigte Trommel (14), einen stationären Motor (15) und eine Transmission (16) mit einem die Trommel (14) umgebenden Kranz (22) und einem in den Kranz eingreifenden Organ (21), welche die Trommel (14) mit dem stationären Motor (15) verbindet.

2. Fernmanipulationsarm nach Anspruch 1, **dadurch gekennzeichnet, dass** er eine Aufwickeleinrichtung der zu den Antriebsmotoren führenden elektrischen Kabel umfasst.

3. Fernmanipulationsarm nach Anspruch 2, **dadurch gekennzeichnet, dass** die Aufwickeleinrichtung (32) zwischen der Trommel (14) und einem zylindrischen Teil des Gehäuses (13) ein freies kreisbogenförmiges Stück (34) umfasst, wobei die elektrischen Kabel (36) an einem Punkt der Trommel und an einem Punkt des genannten zylindrischen Teils befestigt sind.

4. Fernmanipulationsarm nach Anspruch 1, 2 oder 3, **dadurch gekennzeichnet, dass** er Endschalter (33) der Trommel umfasst, die stationäre Teile und mobile Teile aufweisen, die auf einen verschiebbaren Wagen bzw. Schlitten (42) montiert sind, und eine Schraube (39), die an der Trommel befestigt ist und in eine Kerbe des Wagens bzw. Schlittens eingreift.

5. Fernmanipulationsarm nach einem der vorangehenden Ansprüche, **dadurch gekennzeichnet, dass** eine (26) der in den Slave-Arm eingebauten mechanischen Transmissionen, bestimmt für den Rotationsantrieb des dem ersten Segment benachbarten Segments des Gelenkzugs, und der Antriebsmotor (24), der die genannte mechanische Transmission antreibt, längs einer Rotationsachse des ersten Segments angeordnet sind.

6. Fernmanipulationsarm nach einem der vorangehenden Ansprüche, **dadurch gekennzeichnet, dass** zwei Segmente des Gelenkzugs in Gleitbewegungen versetzt werden durch zwei der mechanischen Transmissionen, von denen eine ein Kabel und die andere eine Schnecke umfasst, und **dadurch**, dass in dem Antriebsteil des Schnittstellensystems eine das Kabel umfassende mechanische Blockiereinrichtung (58) der Transmission vorgesehen ist.
